(19)

**Europäisches Patentamt**

**European Patent Office**

**Office européen des brevets**

(11) **EP 4 016 415 A1**

(12) **EUROPEAN PATENT APPLICATION**

(43) Date of publication:
**22.06.2022 Bulletin 2022/25**

(21) Application number: **21198231.9**

(22) Date of filing: **22.09.2021**

(51) International Patent Classification (IPC):
**G06Q 10/06** (2012.01)

(52) Cooperative Patent Classification (CPC):
**G06Q 10/06311; G06Q 10/0631**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.12.2020 US 202017129770**

(71) Applicant: **INTEL Corporation**
**Santa Clara, CA 95054 (US)**

(72) Inventors:
• **GRAEFE, Ralf**
**85540 Haar (DE)**
• **ROSALES, Rafael**
**82008 Unterhaching (DE)**
• **PENG, Yang**
**81825 Munich (DE)**
• **GEISSLER, Florian**
**81673 Munich (DE)**
• **PAULITSCH, Michael**
**85521 Ottobrunn (DE)**
• **KOSE CIHANGIR, Neslihan**
**81927 Munich (DE)**
• **BALDOVIN, Andrea**
**81735 Munich (DE)**
• **QUTUB, Syed**
**81375 Munich (DE)**

(74) Representative: **Viering, Jentschura & Partner mbB**
**Patent- und Rechtsanwälte**
**Am Brauhaus 8**
**01099 Dresden (DE)**

(54) **DEPLOYMENT OF AUTONOMOUS VEHICLES**

(57)     Disclosure herein are systems and methods for deploying an autonomous vehicle during an idle time. As disclosed herein, a request for a mobility service may be received. The request may include constraints for usage of the autonomous vehicle. An optimal mobility service strategy may be determined based on the constraints. The optimal mobility service strategy may be selected from a plurality of mobility service strategies. A notification may be transmitted to a user device. The notification may include details of the optimal mobility service strategy.

FIG. 3

EP 4 016 415 A1

**Description**

FIELD OF THE DISCLOSURE

The present subject matter relates to autonomous systems. More particularly, the present subject matter relates to deployment of autonomous vehicles during foreseeable idle times.

BACKGROUND

Autonomous vehicles have been developed to automate, adapt, or enhance vehicle systems to increase safety and provide better driving. In such systems, safety features are designed to avoid collisions and accidents by offering technologies that alert the driver to potential problems, or to avoid collisions by implementing safeguards and allowing drivers to take over control of the vehicle. Autonomous vehicles rely on various sensors that are able to detect objects and other aspects of their operating environment.

BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

FIG. 1 illustrates a schematic of a system, in accordance with at least one example of this disclosure.
FIG. 2 illustrates a method for deployment of autonomous vehicles, in accordance with at least one example of this disclosure.
FIG. 3 illustrates a method for determining optimal deployment strategies, in accordance with at least one example of this disclosure.
FIGS. 4A, 4B, and 4C illustrate graphical representations of scoring functions, in accordance with at least one example of this disclosure.
FIG. 5 illustrates a visual comparison of preference settings and strategy scores, in accordance with at least one example of this disclosure.
FIG. 6 illustrates a block diagram illustrating an example machine upon which any one or more of the techniques (e.g., methodologies) discussed herein may perform in accordance with at least one example of this disclosure.

DETAILED DESCRIPTION

Automobiles may spend the majority of their time idle. For example, automobiles may spend as much as 95% of their time idle. The large percentage to time spent idle may lead to a massive consumption of parking space and reduced economic use for their owners.
Idle times are often foreseeable. For example, a car owner knows his or her vehicle will be idle while parked when the owner is at work, shopping, or on vacation. Car-sharing may be used to help the situation of idle vehicles sitting underutilized. However, not every car owner is willing to accept the potential risks for the asset in terms of privacy, hygiene, and/or vehicle damage. For automated systems, such as automated vehicles (AV), with a high level of automation, such as level 4 (L4) or level 5 (L5) as defined by the Society of Automotive Engineers (SAE), static and dynamic strategies may be implemented to expand car-sharing concepts since the AVs may complete trips without passengers and/or unknown drivers having to drive the vehicles.
As disclosed herein, optimal deployment of AVs during idle times may be realized. The optimal deployment may allow the owners of the AVs to set preferences, sometimes referred to as constraints, for use of the AVs. Using the constraints, the AVs can be deployed to complete trips. The trips may include passenger carrying, delivering packages or other cargo, etc.
The constraints may specify the types of trips for which the AVs may be used and for how long the AVs may be used. For example, the constraints may specify that an AV is only usable to deliver packages or that the AV is only usable to carry passengers that agree not to eat or drink inside the AV. The constraints may also specify that the AV must be returned by a given time and with a minimum charge. For example, if the owner is shopping and expects to be done in about 3 hours, the own may specify that the AV must be returned within 2.5 hours and that the remaining charge must be at least 35% to ensure the AV has enough charge to get the owner home or to a recharging station.
Once the constraints are entered and the AVs are made available by their owners, users need use of the AVs may request service. Once the request is approved, the AV may be activated to complete a trip, sometimes referred to as a mission. Once the AV is deployed for a mission, the owner of the AV may receive a notification informing the owner of the mission details. Also, as part of the request process, the owner of the AV may receive a notification of the request including mission details. The owner may then choose to allow the requested use of his or her AV or deny the request.

Once the request is accepted activation signals may be sent to controllers of the AVs. The activation signals may cause the AVs to complete the missions as requested. Once completed, the AVs may return to the owners. Once returned, a notification may be sent to the owners alerting them that their AVs have been returned and the location of the AVs.

The above discussion is intended to provide an overview of subject matter of the present patent application. It is not intended to provide an exclusive or exhaustive explanation of the invention. The description below is included to provide further information about the present patent application.

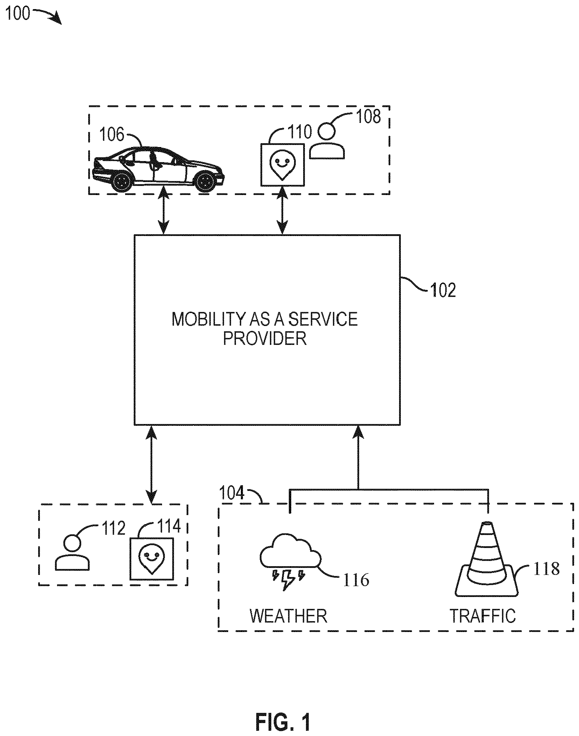

Turning now to the figures, FIG. 1 shows an example schematic of a system 100 for deployment of autonomous vehicles in accordance with at least one example of this disclosure. System 100 may include a mobility as a service (MaaS) provider 102, a remote computer system 104, and one or more autonomous vehicles (AV) 106. During use, an owner 108 of autonomous vehicle 106 may use an owner device 110 to make autonomous vehicle 106 available to a user 112. User 112 may use a user device 114 to request use of AV 106. As disclosed herein, MaaS provider 102 may allow third party users to register as vehicle owners, submit mobility service requests, plan trips, and make payments.

As disclosed herein, MaaS provider 102 may receive preferences from owner 108 that define criteria in which owner 108 may allow user 112 to use AV 106. The preferences may sometimes be referred to as owner preferences. The preferences can include, but are not limited to, privacy settings, hygiene, damage aversion, social responsibility, and/or economic use. As disclosed herein, the preferences may allow owner 108 to specify when and how AV 106 may be useable by user 112. For instance, the preferences may further allow owner 108 to specify times AV 106 may be available, types of activities AV 106 may be used for, return conditions, etc.

MaaS provider 102 may utilize deployment strategies as disclosed herein to pair users, such as user 112, with AVs, such as AV 106. The deployment strategies may be specified by MaaS provider 102. Deployment strategies may also be specified in part, or in whole, by owner 108. As disclosed herein, deployment strategies may allow owners of autonomous vehicles to deploy autonomous vehicles during otherwise idle times.

While FIG. 1 shows a single AV, AV 106, and a single user, user 112, MaaS provider 102 may allow multiple owners to register their vehicles for use and multiple users to request mobility services. In addition to allowing individuals to register their vehicles, MaaS provider 102 may be part of a robotaxi service. In addition, while FIG. 1, and this disclosure in general, discussed AVs, the systems and methods disclosed herein may apply to other autonomous systems. For example, MaaS provider 102 may allow user 108 to make available a drone for use by user 112.

Remote computer system 104 may be any remote computer system that exchanges information with MaaS provider 102. Remote computer system 104 may be maintained by the owner of MaaS provider 102 or a different entity. For example, remote computer system 104 may include weather data 116 compiled and maintained by government and/or private sources. Remote computer system 104 may also include traffic data 118 compiled and maintained by government and/or private sources and may include traffic density as well as road construction statuses. While FIG. 1 shows MaaS provider 102 and remote computer system 104 as single entities, both may be implemented using any number of computer systems that communicate with one another.

As disclosed herein, MaaS provider 102 may utilize deployment strategies in conjunction with preferences and data from remote computer system 104 to determine optimal deployment strategies for AV 106 during idle times. The systems and methods disclosed herein may be integrated directly into the navigation and trip-planning process. For example, if foreseeable idle times after reaching a destination are sufficiently large, a customized deployment strategy during the idle times can be provided to owner 108. Owner 108 may accept and instruct AV 106 accordingly and/or turn control of AV 106 over to MaaS provider 102.

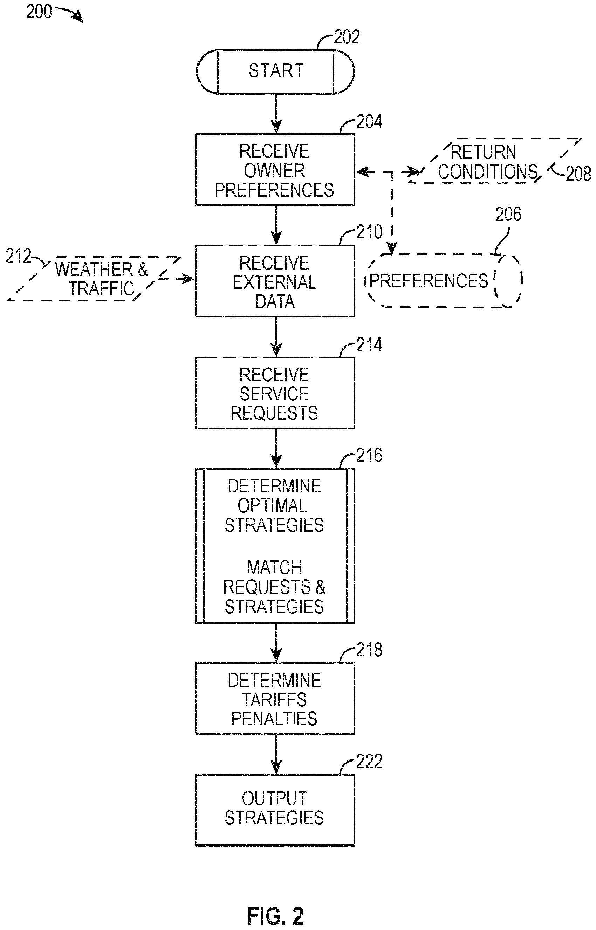

FIG. 2 illustrates a method 200 for deployment of autonomous vehicles in accordance with at least one example of this disclosure. Method 200 may begin at stage 202 and proceed to stage 204 where owner preferences may be received. As disclosed herein, owner 108 may provide preferences for when AV 106 may be deployed. Upon first offering AV 106 for deployment and/or when signing up for a service that utilizes the systems and methods disclosed herein, owner 108 may provide his or her preferences. As such, the preferences may be saved in a database 206 as part of stage 204. In addition, the preferences may be retrieved from database 206 as part of stage 204.

The preferences may be divided into categories. Non-limiting examples of categories can include privacy, hygiene, damage aversion, social responsibility, and economic use. For privacy, owner 108 may input whether and/or to what extent other persons may be permitted to enter the inside of AV 106. For example, owner 108 may have personal items inside AV 106 and thus may want to limit access to interior compartments, such as a trunk area, that may contain personal items. Because user 112 may have access to gloveboxes or other storage within an interior compartment of AV 106, owner 108 may have restrictions on who can access those areas to protect sensitive information such as, phone numbers, home address, etc., that may be stored therein. For example, owner 108 may wish to restrict access to the interior of AV 106 when vehicle registration and/or insurance information may be stored in consoles and/or gloveboxes.

For a hygiene category, owner 108 may limit access to users that have a certain hygiene level, which may be determined through owner feedback. For example, as user 112 utilizes a service, various owners may provide feedback as to a condition in which user 112 left vehicles. Using the feedback, a hygiene rating may be established for user 112. The feedback may rate user 112 on various subcategories such as leaving trash or personal items in vehicles, staining the seats, spilling food/drinks in the vehicles, and using vehicles when user 112 is sick. Thus, owner 108 may specify that AV 106 is not available to people who may have the flu or other possible contagious illnesses.

For a damage aversion category, owner 108 may specify that the risk of AV 106 being damaged is below a certain percentage. For example, damage aversion may relate to passenger vandalism, collisions with other vehicles, vandalism of passersby, damage by weather, etc. As part of the risk aversion, owner 108 may specify locations where AV 106 may not be taken. For example, if an area is known or suspected to have high rates of vandalism and/or theft, owner 108 may specify, for example, by zip code and/or a geofence, areas where AV 106 is not permitted to go. Storms or other weather conditions may damage AV 106 and thus, owner 108 may specify particular weather conditions where AV 106 may or may not be available.

For a social responsibility category owner 108 may specify a level in which use of AV 106 contributes to the wellbeing of the community in the local area. For example, owner 108 may specify that AV 106 may only be used to help people in need, avoid the creation of additional traffic, reduce pollution and/or noise, etc. Social responsibility may be specified by specifying a trip, sometimes called a mission, type AV 106 may be used to complete.

For an economic category, owner 108 may specify that AV 106 may only be used when a net gain of its use benefits owner 108. For example, owner 108 may specify that after factoring wear and tear on AV 106, AV 106 may only be used if the income generated is greater than the costs for the mission. Example costs include depreciation due to increased mileage, maintenance costs, fuel costs, etc. Examples of fuel costs may be the cost of electricity to recharge the batteries of AV 106.

Another aspect of receiving owner preferences may include receiving return conditions as input 208. The return conditions may specify the state of AV 106 when AV 106 is returned. Examples of return conditions include times AV 106 is available and/or must be returned. An example of times AV 106 may be available include specifying a specific time window. For instance, owner 108 may specify that AV 106 is available between 10:00 and 15:00, which may coincide with times owner 108 is at work. Owner 108 may specify days of the week, such as Monday through Friday, that AV 106 is available.

An example of specifying return conditions may include a time in which AV 106 must be returned and where AV 106 is to be returned. For instance, receiving the owner preferences may include owner 108 specifying that AV 106 must be returned by 14:30. The time may coincide with a time owner 108 expects an activity, such as a movie, to end, or a time before hand to provide a buffer in case AV 106 is delayed. The return conditions may also include specifying that AV 106 is to be returned to the same parking lot in which owner 108 originally parked it.

The return conditions may also specify a charge and/or fuel level remaining when AV 106 is returned. For example, owner 108 may specify that AV 106 be returned with at least 35% charge remaining in the battery. Owner 108 may specify the return fuel state to ensure AV 106 has enough fuel/charge to allow owner 108 to return home and/or to a charging or fueling station. The fuel state may include both fuel and charge for a hybrid vehicle.

Once owner 108 has made AV 106 available and provided the owner preferences, external data may be received (210). Receiving external data may include receiving weather and traffic data as inputs 212. As disclosed herein, the external data may be received from remote computer systems. The external data may include traffic updates such as known traffic accidents, areas of congestions, etc. Traffic data may also include data specifying when and where road construction or other events, such as concerts and/or sporting events, may cause traffic delays or other congestions.

Weather data may include forecasts for local weather. For example, weather data may include data indicating when and where thunderstorms, hail, snow, etc. may be expected. As part of the owner preferences, owner 108 may specify certain weather conditions when AV 106 may not be available. For instance, owner 108 may specify that AV 106 is not available during expected hail or snow to minimize potential damage to AV 106.

At stage 214 service requests may be received. The service requests may be received from multiple users and at various times. For example, users may continuously submit service requests. The requests may be for immediate service. For example, user 112 may submit a request for immediate service after completing a shopping trip. User 112 may also submit a request for future service. For instance, user 112 may request AV 106 at an airport at a future time in expectation of a flight landing and needing travel from an airport.

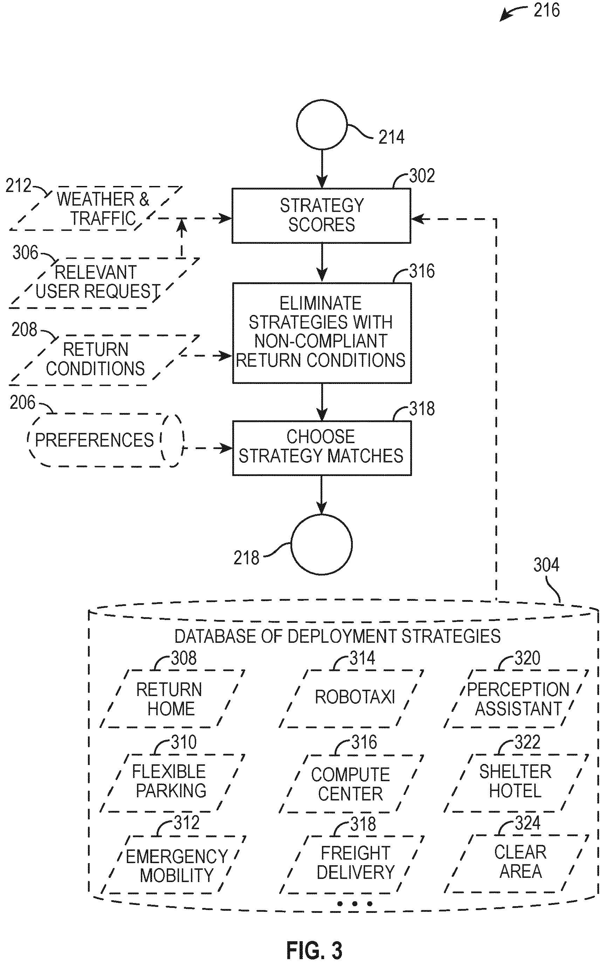

Once service requests are received, optimal mobility strategies may be determined and matched to requests via subroutine 216. FIG. 3 illustrates subroutine 216 in accordance with at least one example of this disclosure. Subroutine 216 may be part of a deployment strategy finder implemented by MaaS provider 102 and may begin at stage 302 where strategy scores may be determined. As part of determining strategy scores, weather and traffic data 212 may be an input along with deployment strategies, which may be stored in a database 304. The service requests received in stage 214 may be an input as a list of relevant user requests 306.

As disclosed herein, subroutine 216 may utilize the various inputs to determine an optimal driving policy that complies with all specified constraints. In other words, subroutine 216 may use the deployment strategies in database 304 to match each of the service requests with a corresponding AV.

Database 304 may store a variety of deployment strategies and properties of the deployment strategies, such as scoring functions, for use as disclosed herein. An example deployment strategy may be return home strategy 308. Returning home may entail AV 106 returning to the home of owner 108. For example, after owner 108 arrives at an airport, AV 106 may drive back to the home of owner 108. By returning home, owner 108 may avoid occupying a parking spot, and thus save on parking cost, while out of town. AV 106 may return home and sit idle until owner 108 returns. Upon owner 108 returning, AV 106 may return to the airport and be available for owner 108 to use.

Part of, or in addition to, returning home AV 106 may park itself, sometimes referred to as automated valet parking (AVP). As such, owner 108 may choose where AV 106 may park, (e.g., a designated AV parking lot at the airport) and AV 106 may travel to the location and find an appropriate parking space.

Returning home and performing AVP may represent static parking. Thus, no other user, such as user 112, may utilize AV 106. As a result, owner 108 may not realize additional income or an increase in social responsibility as disclosed herein. However, as disclosed herein, privacy, hygiene, and damage aversion categories of owner preferences may score high utilizing return home 308 deployment strategy.

Another deployment strategy may be flexible parking 310. Flexible parking, sometimes referred to as an alert mode, may entail AV 106 searching for a parking space while maintaining the flexibility to change this parking spot over the course of the idle time. For example, it may be favorable for AV 106 to relocate to a different parking space for one or more reasons as disclosed herein. In this instance, owner preference categories such as high damage aversion, hygiene, and privacy may score high.

Flexible parking may allow AV 106 to exploit temporarily available parking spaces and make space on demand. For example, AV 106 may temporarily park at a charging station. After charging, AV 106 may relocate to make the charging station available for other users.

Flexible parking may allow AV 106 to react to forecasted threats while in an alert mode. For example, AV 106 may reposition if weather such as thunderstorms, hail, etc. are forecasted. During such an event, vehicles parked outside or in specific areas could face potential damage and/or may pose a risk to others. AV 106 being in alert mode may allow AV 106 to initiate an evacuation plan and act according to the given situation to move AV 106 to safety and/or travel to owner 108. For example, if flooding is forecasted, AV 106 may travel to owner 108 from a parking space for use by owner 108 to evacuate.

An emergency mobility 312 deployment strategy may allow AV 106 to be used in emergency situations. For example, an injured person may request transportation to a hospital. In this instance, owner categories such as social responsibility may be high, while hygiene and privacy may be low.

A robotaxi 314 deployment strategy may include AV 106 operating as a part of a car service. For example, AV 106 may respond to user requests or follow a fixed route (e.g. a bus line and/or operate as a shuttle to and from popular destinations). For instance, AV 106 may travel back and forth from a train station to an airport. In a robotaxi deployment strategy, economic use and social responsibility owner preference categories may score high while privacy and hygiene may score lower.

A compute center 316 deployment strategy may include AV 106 remaining in a static parking space, connecting to the cloud, and providing compute resources using its onboard computer. For example, while sitting idle, the onboard computer of AV 106 could be used to mine a cryptocurrency, perform computations for research centers (e.g., colleges, national laboratories, etc.) Utilizing compute center 316 deployment strategy the owner preference categories of hygiene and damage aversion may be high, while economic use may be increased.

A freight delivery 318 deployment strategy may allow AV 106 to deliver mail and/or other packages to specified locations in cooperation with a third-party delivery service. By using AV 106 to deliver packages highly congested city centers may see a social benefit by utilizing otherwise idle vehicles (i.e., spare capacity) to reduce the number of delivery vehicles needed by third-party delivery services. In other words, the spare capacity may be effectively leveraged to minimize the impact of last-mile delivery services on traffic and pollution.

In addition, dedicated and/or automated mail pick-up and drop stations may be used to facilitate this service. Access to the inside of AV 106 may not necessarily be required. For example, a mail basket/box could be temporarily attached to the outside of AV 106 or AV 106 may be a truck with an already exposed bed. Truck cargo space that owner 108 has cleared of personal items may also be used. Therefore, privacy, hygiene, and economic owner preference categories may score high.

A perception assistant 320 deployment strategy may allow AV 106 to help other automated vehicles by using its environment sensors and sharing perception. For example, in a highly connected traffic scenario, such complementary sensing data may be used to increase traffic flow and improve safety. For example, AV 106 may transmit traffic data to MaaS provider 102 so that other AVs may be rerouted around traffic congestions.

In addition, AVs may communicate with one another. The vehicle to vehicle (V2V) communication may allow vehicles to take a strategic position, such as at intersections and/or corners with limited visibility, and frequently occluded spots, to reduce the potential for collisions. Further, AV 106 may share weather data with other AVs that may not be equipped with similar sensors or may not be equipped to sense weather. Perception assistant 320 may score high with owner preference categories such as hygiene and social responsibility.

AV 106 may also be deployed as a shelter/hotel 322. For example, AV 106 may be a van and thus, could potentially be used as a mobile shelter/hotel by others. For example, AV 106 could be used as a shelter for those that may be outside overnight during winter and/or during an abrupt snow fall or hail storm, etc. This service could be monetized in the form of a hotel-like stay. For example, tourists that may be looking for a short-notice place to stay, may essentially "book" AV 106 for the night. Social responsibility and economic use owner preference categories may score high using shelter/hotel 322 deployment strategy while hygiene and privacy may score lower.

A clear area 324 deployment strategy may allow AV 106 to clear high traffic areas. For example, using clear area 324 deployment strategy, after dropping owner 108 at a destination (e.g., a shopping center, movie theater, etc.) AV 106 may calculate and use the fastest escape avenue to clear a high traffic area. Once clear of the high traffic area, AV 106 may locate a parking spot to sit idle. Using clear area 324 deployment strategy owner preference categories such as privacy, hygiene, and social responsibility may be high.

While the various deployment strategies have been described individually, the various deployment strategies may be combined and/or overlap one another. For example, after implementing clear area 324 strategy, AV 106 may implement compute center 316 strategy. While implementing return home 308 strategy AV 106 may act as a robotaxi to transport a user wishing to go to a location the vicinity of the home of owner 108.

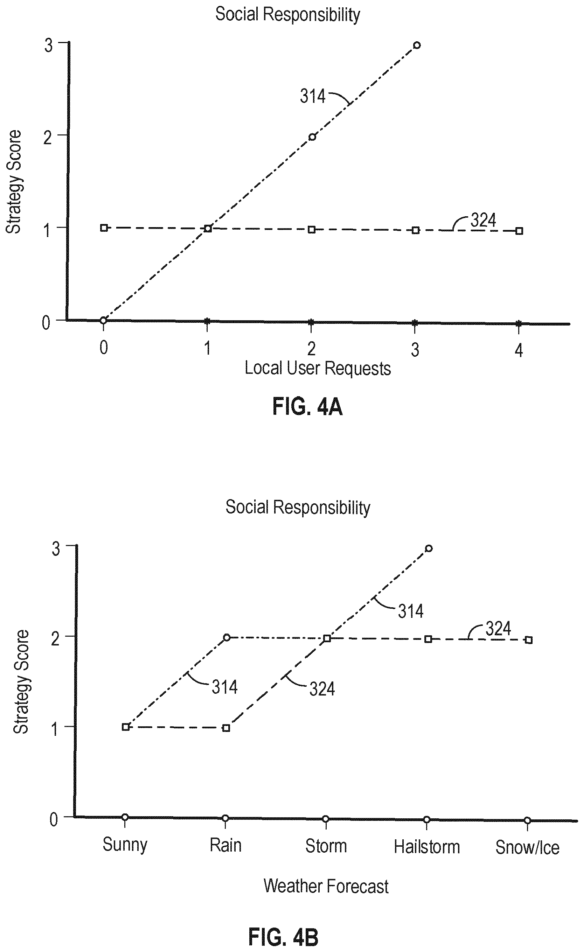

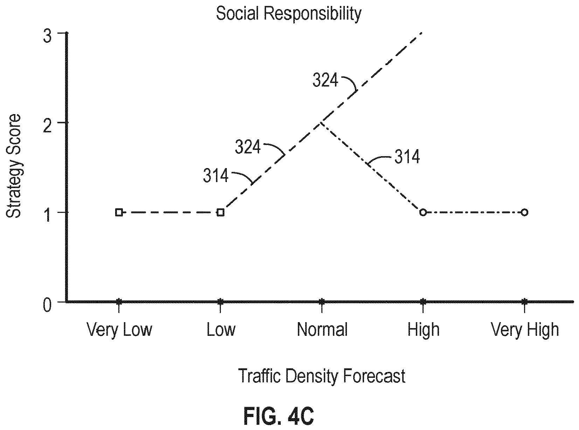

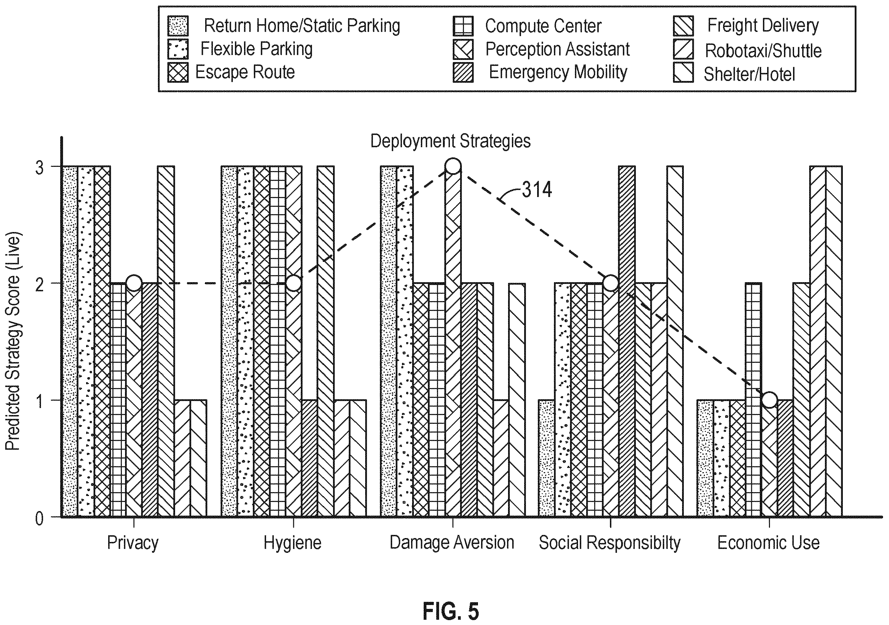

To determine the various strategy scores, score functions may be provided by MaaS provider 102. The score functions may utilize the various inputs to arrive at a value for each deployment strategy. FIGS. 4A, 4B, and 4C illustrate graphical representations of scoring functions for social responsibility, in accordance with at least one example of this disclosure. For clarity, only functions for robotaxi 314 and clear area 324 are shown. FIG. 5 shows a values for each deployment strategy.

As shown in FIG. 4A, for robotaxi 314 deployment strategy, a social responsibility score may grow linearly as a function of the number of requests in the area. For clear area 324, there may be a social benefit since AV 106 is clearing the area of congestion.

FIG. 4B shows that for deteriorating weather conditions (i.e., when relative customer comfort is increased via AV 106), the social responsibility score may also increase step wise for robotaxi 314 strategy. Clear area 324 may have a benefit during inclement weather since it is not on the road during snow/ice where the potential for an accident may increase.

FIG. 4C shows that the social responsibility score may decrease with increasing traffic density since taxis may worsen condition and contribute to traffic jams for robotaxi 314 strategy. When traffic density is high, clear area 324 may be socially beneficial since AV 106 is removing itself from the congestion.

While FIGS. 4A, 4B, and 4C show only two deployment strategies, similar functions may be defined for the other deployment strategies. Also, the representations of scoring functions shown in FIGS. 4A, 4B, and 4C are merely examples. Scoring functions may be complex mathematical formulas.

Using the various scoring functions, an overall score for each deployment function and owner preference may be determined. For example, the overall score may be determined by finding the maximum of the predicted scores of a category as shown in Equation 1. For instance, for robotaxi 314, if there is one local user request, it is rainy weather, and the traffic is normal, using FIGS. 4A, 4B, and 4C, the various social responsibility scores for the three categories may be $sr_{users}^{taxi} = 1$, $sr_{weather}^{taxi} = 2$, and $sr_{weather}^{taxi} = 2$, where $sr$ = social responsibility score. Using Equation 1 we see the overall score is 2.

$$sr^{taxi} = \max\left(sr_{users}^{taxi}, sr_{weather}^{taxi}, sr_{traffic}^{taxi}\right) = 2 \qquad \text{Equation 1}$$

Using Equation 2 we see that for clear area the overall score is 2.

$$sr^{clear} = \max\left(sr_{users}^{clear} = 1, sr_{weather}^{clear} = 1, sr_{traffic}^{clear} = 2\right) = 2 \qquad \text{Equation 2}$$

After determining the strategy score for each deployment strategy subroutine 216 may proceed to stage 316 where strategies with non-compliant return conditions may be eliminated. For example, if owner 108 has specified a time AV 106 must be returned, any deployment strategy that would result in AV 106 being returned after the specified time may be removed from consideration. To determine if return criteria are satisfied, expected return time, location, and remaining battery life, may be simulated using Monte Carlo simulations, by extrapolating the trips for all possible strategies, etc. Options that result in expected return conditions not satisfying the specified return conditions may be eliminated from the list of optimal strategies.

After eliminating deployment strategies that may fail a return condition, subroutine 216 may proceed to stage 318 where AVs and associated strategies may be matched with user requests. To match AVs and deployment strategies with users, a distance metric may be specified. Without loss of generality, and as a non-limiting example, the distance may be a mean-squared error (MSE) distance.

Using the distance metric, the distance between a preference vector and the strategy score vector may be calculated, where the dimensions of the vectors may be the score categories. For example, using the categories described herein, the preferences vector may be defined as:

$$p = (pr^p, hy^p, da^p, sr^p, eu^p) \qquad \text{Equation 3}$$

where $pr$ = privacy, $hy$ = hygiene, $da$ = damage aversion, $sr$ = social responsibility, and $eu$ = economic use.

Similarly, a strategy vector may be defined for each deployment strategy, s, shown in database 304 as:

$$s = (pr^s, hy^s, da^s, sr^s, eu^s) \qquad \text{Equation 4}$$

The distance between the two vectors may be the MSE(p,s). For example, for

$$s = taxi \qquad \text{Equation 5}$$

$$taxi = (1,1,1,2,3) \qquad \text{Equation 6}$$

$$p = (2,3,1,1,2) \qquad \text{Equation 7}$$

$$MSE(p, taxi) = \frac{1}{5} \sum_{i=1}^{5} (p_i - taxi_i)^2 = 1.4 \qquad \text{Equation 8}$$

The process may be repeated for each of the strategies. The deployment strategy (or strategies) with the smallest MSE may be selected as optimal. A visual comparison of preference settings and strategy scores is shown in FIG. 5.

It is possible multiple strategies may have the same score or minimum MSE distance. In instances where there is more than one optimal strategy, a deployment strategy with a higher priority may be selected. For example, emergency mobility 312 may be selected over shelter/hotel 322 if both strategies have the smallest MSE.

Once deployment strategies and AVs have been matched to user requests, negotiations may begin for a service contract (218). The service contract may specify the cost for user 112 to use AV 106. For example, the cost, insurance, tariffs, and any penalties for violations of the service contract may be negotiated. For example, owner 108 may offer AV 106 for a price and user 112 may accept the price, decline, or offer a different price. MaaS provider 102 may act as an intermediary in the negotiations.

For instances where owner 108 is not offering AV 106 to users, such as user 112, MaaS provider 102 may be the other party to the negotiations. In this instance, owner 108 may be purchasing information from MaaS provider 102 and the information may allow AV 106 to complete a trip safely. For instance, owner 108 may purchase data collected by other AVs operating in perception assistant 320 deployment strategies that allow AV 106 to safely navigate home.

Once the service contract is accepted by respective parties, the various deployment strategies may be outputted (220). Outputting the various strategies may include transmitting the details of the service contract to user device 114 and owner device 110. In addition, outputting the strategies may include transmitting activation signals to AVs, such as AV 106. The activation signals may cause a controller of the AVs to execute a planned strategy. For example, for compute center 316, outputting the strategy may include transmitting data to AV 106 to utilize AV's 106 onboard computer to perform calculations. Other examples include an activation signal causing AV 106 to autonomously begin driving to a parking space or otherwise moving in response to the activation signal in accordance with the planned trip.

One aspect of outputting the strategies may include restricting voice controls and/or an ability to manually override the autonomous operations by user 112 so as to prevent a deviation from the usage specified in the service contract and deployment strategy. An attempted violation of the agreed-upon contract may be detected by AV 106 itself and a failsafe action may be executed. For example, after detecting an attempted violation, AV 106 may perform an emergency stop and notifying owner 108 and/or MaaS provider 102. User 112 may then be charged with a penalty fee or be subject to other disciplinary action such as restriction from further use of MaaS provider 102.

The various embodiments disclosed herein may be implemented in one or a combination of hardware, firmware, and software. Embodiments may also be implemented as instructions stored on a machine-readable storage device, which may be read and executed by at least one processor to perform the operations described herein. A machine-readable storage device may include any non-transitory mechanism for storing information in a form readable by a machine (e.g., a computer). For example, a machine-readable storage device may include read-only memory (ROM), random-access memory (RAM), magnetic disk storage media, optical storage media, flash-memory devices, and other storage devices and media.

A processor subsystem may be used to execute the instruction on the -readable medium. The processor subsystem may include one or more processors, each with one or more cores. Additionally, the processor subsystem may be disposed on one or more physical devices. The processor subsystem may include one or more specialized processors, such as a graphics processing unit (GPU), a digital signal processor (DSP), a field programmable gate array (FPGA), or a fixed function processor.

Examples, as described herein, may include, or may operate on, logic or a number of components, modules, or mechanisms. Modules may be hardware, software, or firmware communicatively coupled to one or more processors in order to carry out the operations described herein. Modules may be hardware modules, and as such modules may be considered tangible entities capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine-readable medium. In an example, the software, when executed by the underlying hardware of the module, causes the hardware to perform the specified operations. Accordingly, the term hardware module is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software; the general-purpose hardware processor may be configured as respective different modules at different times. Software may accordingly configure a hardware processor, for example, to constitute a particular module at one instance of time and to constitute a different module at a different instance of time. Modules may also be software or firmware modules, which operate to perform the methodologies described herein.

Circuitry or circuits, as used in this document, may comprise, for example, singly or in any combination, hardwired circuitry, programmable circuitry such as computer processors comprising one or more individual instruction processing cores, state machine circuitry, and/or firmware that stores instructions executed by programmable circuitry. The circuits, circuitry, or modules may, collectively or individually, be embodied as circuitry that forms part of a larger system, for example, an integrated circuit (IC), system on-chip (SoC), desktop computers, laptop computers, tablet computers, servers, smart phones, etc.

As used in any embodiment herein, the term "logic" may refer to firmware and/or circuitry configured to perform any of the aforementioned operations. Firmware may be embodied as code, instructions or instruction sets and/or data that are hard-coded (e.g., nonvolatile) in memory devices and/or circuitry.

"Circuitry," as used in any embodiment herein, may comprise, for example, singly or in any combination, hardwired circuitry, programmable circuitry, state machine circuitry, logic and/or firmware that stores instructions executed by programmable circuitry. The circuitry may be embodied as an integrated circuit, such as an integrated circuit chip. In some embodiments, the circuitry may be formed, at least in part, by the processor circuitry executing code and/or instructions sets (e.g., software, firmware, etc.) corresponding to the functionality described herein, thus transforming a general-purpose processor into a specific-purpose processing environment to perform one or more of the operations described herein. In some embodiments, the processor circuitry may be embodied as a stand-alone integrated circuit or may be incorporated as one of several components on an integrated circuit. In some embodiments, the various components and circuitry of the node or other systems may be combined in a system-on-a-chip (SoC) architecture

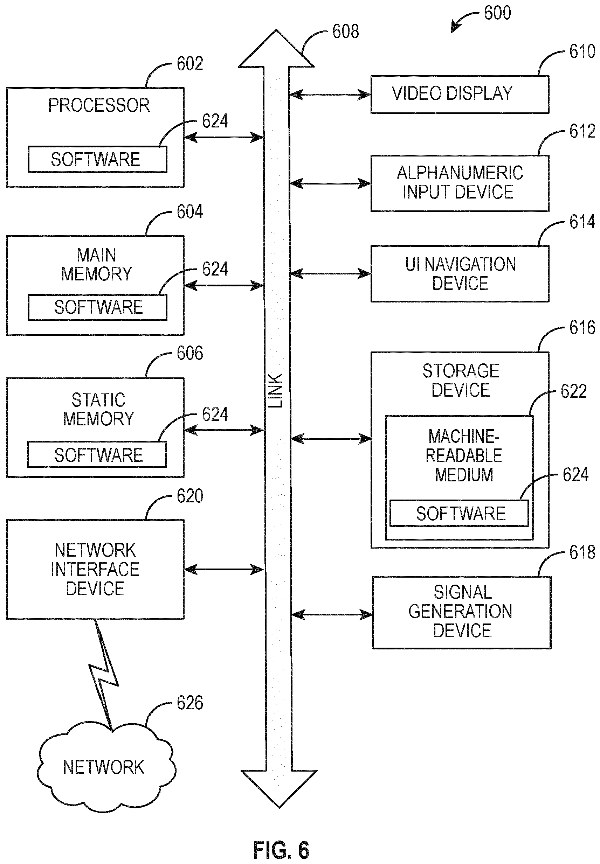

FIG. 6 is a block diagram illustrating a machine in the example form of a computer system 600, such as computer system used to implement MaaS provider 102, within which a set or sequence of instructions may be executed to cause the machine to perform any one of the methodologies discussed herein, according to an embodiment. In alternative embodiments, the machine operates as a standalone device or may be connected (e.g., networked) to other machines. In a networked deployment, the machine may operate in the capacity of either a server or a client machine in server-client network environments, or it may act as a peer machine in peer-to-peer (or distributed) network environments. The machine may be a vehicle subsystem, a personal computer (PC), a tablet PC, a hybrid tablet, a personal digital assistant (PDA), a mobile telephone, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. Similarly, the term "processor-based system" shall be taken to include any set of one or more machines that are controlled by or operated by a processor (e.g., a computer) to individually or jointly execute instructions to perform any one or more of the methodologies discussed herein.

Example computer system 600 includes at least one processor 602 (e.g., a central processing unit (CPU), a graphics processing unit (GPU) or both, processor cores, compute nodes, etc.), a main memory 604 and a static memory 606, which communicate with each other via a link 608 (e.g., bus). The computer system 600 may further include a video display unit 610, an alphanumeric input device 612 (e.g., a keyboard), and a user interface (UI) navigation device 614 (e.g., a mouse). In one embodiment, the video display unit 610, input device 612 and UI navigation device 614 are incorporated into a touch screen display. The computer system 600 may additionally include a storage device 616 (e.g., a drive unit), a signal generation device 618 (e.g., a speaker), a network interface device 620, and one or more sensors (not shown), such as a global positioning system (GPS) sensor, compass, accelerometer, gyrometer, magnetometer, or other sensor.

The storage device 616 includes a machine-readable medium 622 on which is stored one or more sets of data structures and instructions 624 (e.g., software) embodying or utilized by any one or more of the methodologies or functions described herein. The instructions 624 may also reside, completely or at least partially, within the main memory 604, static memory 606, and/or within the processor 602 during execution thereof by the computer system 600, with the main memory 604, static memory 606, and the processor 602 also constituting machine-readable media.

While the machine-readable medium 622 is illustrated in an example embodiment to be a single medium, the term "machine-readable medium" may include a single medium or multiple media (e.g., a centralized or distributed database, and/or associated caches and servers) that store the one or more instructions 624. The term "machine-readable medium" shall also be taken to include any tangible medium that is capable of storing, encoding or carrying instructions for execution by the machine and that cause the machine to perform any one or more of the methodologies of the present disclosure or that is capable of storing, encoding or carrying data structures utilized by or associated with such instructions. The term "machine-readable medium" shall accordingly be taken to include, but not be limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks.

The instructions 624 may further be transmitted or received over a communications network 626 using a transmission medium via the network interface device 620 utilizing any one of a number of well-known transfer protocols (e.g., HTTP). Examples of communication networks include a local area network (LAN), a wide area network (WAN), the Internet, mobile telephone networks, plain old telephone (POTS) networks, and wireless data networks (e.g., Bluetooth, Wi-Fi, 3G, and 4G LTE/LTE-A, 5G, DSRC, or satellite communication networks). The term "transmission medium" shall be taken to include any intangible medium that is capable of storing, encoding, or carrying instructions for execution by the machine, and includes digital or analog communications signals or other intangible medium to facilitate communication of such software.

Additional Notes

The following, non-limiting examples, detail certain aspects of the present subject matter to solve the challenges and provide the benefits discussed herein, among others.

Example 1 is a method for deploying an autonomous vehicle during an idle time, the method comprising: receiving, at a computing device, a request for a mobility service, the request including constraints for usage of the autonomous vehicle; determining, by the computing device, an optimal mobility service strategy based on the constraints; selecting, by the computing device, the optimal mobility service strategy from a plurality of mobility service strategies; and transmitting, by the computing device, a notification to a user device, the notification including details of the optimal mobility service strategy.

In Example 2, the subject matter of Example 1 optionally includes wherein determining the optimal mobility service strategy includes optimizing the plurality of mobility service strategies based on user preferences of an owner of the autonomous vehicle.

In Example 3, the subject matter of any one or more of Examples 1-2 optionally include wherein determining the optimal mobility service strategy includes optimizing the plurality of mobility service strategies based on user preferences of a user sending the request.

In Example 4, the subject matter of any one or more of Examples 1-3 optionally include wherein determining the optimal mobility service strategy includes maximizing a social responsibility score based on a plurality of user request, the request being one of the plurality of user requests.

In Example 5, the subject matter of any one or more of Examples 1-4 optionally include wherein determining the optimal mobility service strategy includes optimizing the plurality of mobility service strategies based on a plurality of deployment strategies.

In Example 6, the subject matter of any one or more of Examples 1-5 optionally include wherein determining the optimal mobility service strategy includes removing service strategies from the plurality of mobility service strategies based on return conditions.

In Example 7, the subject matter of any one or more of Examples 1-6 optionally include determining a price for the optimal mobility service strategy based on tariffs and penalties.

In Example 8, the subject matter of Example 7 optionally includes wherein determining a price for the optimal mobility service strategy includes negotiating the tariffs and penalties between a user sending the request and a service provider.

In Example 9, the subject matter of any one or more of Examples 1-8 optionally include receiving traffic forecast data for use in determining the optimal mobility service strategy.

In Example 10, the subject matter of any one or more of Examples 1-9 optionally include receiving weather forecast data for use in determining the optimal mobility service strategy.

In Example 11, the subject matter of any one or more of Examples 1-10 optionally include wherein the constraints include return conditions defining a condition in which the autonomous vehicle is to be returned.

In Example 12, the subject matter of any one or more of Examples 1-11 optionally include wherein the constraints include preference setting established by an owner of the autonomous vehicle.

In Example 13, the subject matter of any one or more of Examples 1-12 optionally include receiving confirmation from the user device confirming acceptance of the optimal mobility service strategy; and transmitting an activation signal to the autonomous vehicle upon receiving the confirmation.

Example 14 is at least one computer-readable medium comprising instructions to perform any of the methods of Examples 1-13.

Example 15 is an apparatus comprising means for performing any of the methods of Examples 1-13.

Example 16 is a system for deploying an autonomous vehicle during an idle time, the system comprising: a processor; and a memory storing instructions that, when executed by the processor, cause the processor to perform actions comprising: receiving a request for a mobility service, the request including constraints for usage of the autonomous vehicle, determining an optimal mobility service strategy based on the constraints, selecting the optimal mobility service strategy from a plurality of mobility service strategies, and transmitting a notification to a user device, the notification including details of the optimal mobility service strategy.

In Example 17, the subject matter of Example 16 optionally includes wherein determining the optimal mobility service strategy by the processor includes optimizing the plurality of mobility service strategies based on user preferences of an owner of the autonomous vehicle.

In Example 18, the subject matter of any one or more of Examples 16-17 optionally include wherein determining the optimal mobility service strategy by the processor includes optimizing the plurality of mobility service strategies based on user preferences of a user sending the request.

In Example 19, the subject matter of any one or more of Examples 16-18 optionally include wherein determining the optimal mobility service strategy by the processor includes maximizing a social responsibility score base on a plurality of user request, the request being one of the plurality of user requests.

In Example 20, the subject matter of any one or more of Examples 16-19 optionally include wherein determining the optimal mobility service strategy by the processor includes optimizing the plurality of mobility service strategies based on a plurality of deployment strategies.

In Example 21, the subject matter of any one or more of Examples 16-20 optionally include wherein determining the optimal mobility service strategy by the processor includes removing service strategies from the plurality of mobility service strategies based on return conditions.

In Example 22, the subject matter of any one or more of Examples 16-21 optionally include additional instructions executable by the processor for determining a price for the optimal mobility service strategy based on tariffs and penalties.

In Example 23, the subject matter of Example 22 optionally includes wherein determining a price for the optimal mobility service strategy by the processor includes negotiating the tariffs and penalties between a user sending the request and a service provider.

In Example 24, the subject matter of any one or more of Examples 16-23 optionally include additional instructions executable by the processor to cause the processor to perform additional actions comprising receiving traffic forecast data for use in determining the optimal mobility service strategy.

In Example 25, the subject matter of any one or more of Examples 16-24 optionally include additional instructions executable by the processor to cause the processor to perform additional actions comprising receiving weather forecast data for use in determining the optimal mobility service strategy.

In Example 26, the subject matter of any one or more of Examples 16-25 optionally include wherein the constraints include return conditions defining a condition in which the autonomous vehicle is to be returned.

In Example 27, the subject matter of any one or more of Examples 16-26 optionally include wherein the constraints include preference setting established by an owner of the autonomous vehicle.

In Example 28, the subject matter of any one or more of Examples 16-27 optionally include additional instructions executable by the processor to cause the processor to perform additional actions comprising: receiving confirmation from the user device confirming acceptance of the optimal mobility service strategy; and transmitting an activation signal to the autonomous vehicle upon receiving the confirmation.

Example 29 is a method for deploying a plurality of autonomous vehicles during idle times, the method comprising: receiving, at a computing device, a plurality of requests for a mobility service, each of the plurality of requests associated with a respective user device; determining, by the computing device, an optimal mobility service strategy for each of the plurality of requests; pairing, by the computing device, the optimal mobility service strategy for each of the plurality of requests with a respective request and one of the plurality of autonomous vehicles; transmitting, by the computing device, a notification to each of the respective user devices, the notification including the optimal mobility service paired with the respective request.

In Example 30, the subject matter of Example 29 optionally includes wherein determining the optimal mobility service strategy for each of the plurality of requests includes optimizing the plurality of mobility service strategies based on user preferences of an owner for each of the plurality of autonomous vehicles.

In Example 31, the subject matter of any one or more of Examples 29-30 optionally include wherein determining the optimal mobility service strategy for each of the plurality of requests includes optimizing the plurality of mobility service strategies based on user preferences of a user sending the request.

In Example 32, the subject matter of any one or more of Examples 29-31 optionally include wherein determining the optimal mobility service strategy for each of the plurality of requests includes maximizing a social responsibility score based on a plurality of user request, the request being one of the plurality of user requests.

In Example 33, the subject matter of any one or more of Examples 29-32 optionally include wherein determining the optimal mobility service strategy for each of the plurality of requests includes optimizing the plurality of mobility service strategies based on a plurality of deployment strategies.

In Example 34, the subject matter of any one or more of Examples 29-33 optionally include wherein determining the optimal mobility service strategy for each of the plurality of requests includes removing service strategies from the plurality of mobility service strategies based on return conditions.

In Example 35, the subject matter of any one or more of Examples 29-34 optionally include determining a price for the optimal mobility service strategy for each of the plurality of requests based on tariffs and penalties.

In Example 36, the subject matter of Example 35 optionally includes wherein determining a price for the optimal mobility service strategy for each of the plurality of requests includes negotiating the tariffs and penalties between a user sending the request and a service provider.

In Example 37, the subject matter of any one or more of Examples 29-36 optionally include receiving traffic forecast data for use in determining the optimal mobility service strategy.

In Example 38, the subject matter of any one or more of Examples 29-37 optionally include receiving weather forecast data for use in determining the optimal mobility service strategy.

In Example 39, the subject matter of any one or more of Examples 29-38 optionally include wherein the constraints include return conditions defining a condition in which each of the plurality of autonomous vehicles is to be returned.

In Example 40, the subject matter of any one or more of Examples 29-39 optionally include wherein the constraints include preference setting established by an owner of each of the plurality of autonomous vehicles.

In Example 41, the subject matter of any one or more of Examples 29-40 optionally include receiving confirmation from at least one of the user devices confirming acceptance of the optimal mobility service strategy associated with the at least one of the user devices; and transmitting an activation signal to the autonomous vehicle upon receiving the confirmation.

Example 42 is at least one computer-readable medium comprising instructions to perform any of the methods of Examples 29-41.

Example 43 is an apparatus comprising means for performing any of the methods of Examples 29-41.

Example 44 is a system for deploying a plurality of autonomous vehicles during idle times, the system comprising: a processor; and a memory storing instructions that, when executed by the processor, cause the processor to perform actions comprising: receiving a plurality of requests for a mobility service, each of the plurality of requests associated with a respective user device; determining an optimal mobility service strategy for each of the plurality of requests; pairing the optimal mobility service strategy for each of the plurality of requests with a respective request and one of the plurality of autonomous vehicles; transmitting a notification to each of the respective user devices, the notification including the optimal mobility service paired with the respective request.

In Example 45, the subject matter of Example 44 optionally includes wherein determining the optimal mobility service strategy for each of the plurality of requests by the processor includes optimizing the plurality of mobility service strategies based on user preferences of an owner for each of the plurality of autonomous vehicles.

In Example 46, the subject matter of any one or more of Examples 44-45 optionally include wherein determining the optimal mobility service strategy for each of the plurality of requests by the processor includes optimizing the plurality of mobility service strategies based on user preferences of a user sending the request.

In Example 47, the subject matter of any one or more of Examples 44-46 optionally include wherein determining the optimal mobility service strategy for each of the plurality of requests by the processor includes maximizing a social responsibility score based on a plurality of user request, the request being one of the plurality of user requests.

In Example 48, the subject matter of any one or more of Examples 44-47 optionally include wherein determining the optimal mobility service strategy for each of the plurality of requests by the processor includes optimizing the plurality of mobility service strategies based on a plurality of deployment strategies.

In Example 49, the subject matter of any one or more of Examples 44-48 optionally include wherein determining the optimal mobility service strategy for each of the plurality of requests by the processor includes removing service strategies from the plurality of mobility service strategies based on return conditions.

In Example 50, the subject matter of any one or more of Examples 44-49 optionally include additional instruction executable by the processor to cause the processor to perform additional actions comprising determining a price for the optimal mobility service strategy for each of the plurality of requests based on tariffs and penalties.

In Example 51, the subject matter of Example 50 optionally includes wherein determining a price for the optimal mobility service strategy for each of the plurality of requests by the processor includes negotiating the tariffs and penalties between a user sending the request and a service provider.

In Example 52, the subject matter of any one or more of Examples 44-51 optionally include additional instruction executable by the processor to cause the processor to perform additional actions comprising receiving traffic forecast data for use in determining the optimal mobility service strategy.

In Example 53, the subject matter of any one or more of Examples 44-52 optionally include additional instruction executable by the processor to cause the processor to perform additional actions comprising receiving weather forecast data for use in determining the optimal mobility service strategy.

In Example 54, the subject matter of any one or more of Examples 44-53 optionally include wherein the constraints include return conditions defining a condition in which each of the plurality of autonomous vehicles is to be returned.

In Example 55, the subject matter of any one or more of Examples 44-54 optionally include wherein the constraints include preference setting established by an owner of each of the plurality of autonomous vehicles.

In Example 56, the subject matter of any one or more of Examples 44-55 optionally include additional instruction executable by the processor to cause the processor to perform additional actions comprising: receiving confirmation from at least one of the user devices confirming acceptance of the optimal mobility service strategy associated with the at least one of the user devices; and transmitting an activation signal to the autonomous vehicle upon receiving the confirmation.

In Example 57, the systems or method of any one or any combination of Examples 1 — 56 can optionally be configured such that all elements or options recited are available to use or select from.

The above detailed description includes references to the accompanying drawings, which form a part of the detailed description. The drawings show, by way of illustration, specific embodiments in which the invention can be practiced. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

**Claims**

1. A system for deploying an autonomous vehicle during an idle time, the system comprising:

   a processor; and
   a memory storing instructions that, when executed by the processor, cause the processor to perform actions comprising:

   receiving a request for a mobility service, the request including constraints for usage of the autonomous vehicle during the idle time;
   determining an optimal mobility service strategy based on the constraints;
   selecting the optimal mobility service strategy from a plurality of mobility service strategies; and
   transmitting a notification to a user device, the notification including details of the optimal mobility service strategy.

2. The system of claim 1,

   wherein determining the optimal mobility service strategy by the processor includes optimizing the plurality of mobility service strategies based on user preferences of an owner of the autonomous vehicle; and/or
   wherein determining the optimal mobility service strategy by the processor includes optimizing the plurality of mobility service strategies based on user preferences of a user sending the request.

3. The system of any one of claims 1 or 2,

   wherein determining the optimal mobility service strategy by the processor includes optimizing one or more deployment strategy scores comprising a social responsibility score, privacy, damage aversion, and economic use based on a plurality of user requests, the request being one of the plurality of user requests; and/or
   wherein determining the optimal mobility service strategy by the processor includes removing service strategies from the plurality of mobility service strategies based on return conditions.

4. The system of any one of claims 1 to 3,

   the instructions executable by the processor for determining a price for the optimal mobility service strategy based on tariffs and penalties;
   wherein preferably determining a price for the optimal mobility service strategy by the processor includes negotiating the tariffs and penalties between a user sending the request and a service provider.

5. The system of any one of claims 1 to 4,

   the instructions executable by the processor to cause the processor to perform additional actions comprising receiving traffic forecast data for use in determining the optimal mobility service strategy; and/or
   the instructions executable by the processor to cause the processor to perform additional actions comprising receiving weather forecast data for use in determining the optimal mobility service strategy.

**6.** The system of any one of claims 1 to 5,

wherein the constraints include return conditions defining a condition in which the autonomous vehicle is to be returned; and/or

wherein the constraints include preference setting established by an owner of the autonomous vehicle.

**7.** The system of any one of claims 1 to 6,
the instructions executable by the processor to cause the processor to perform additional actions comprising:

receiving confirmation from the user device confirming acceptance of the optimal mobility service strategy; and transmitting an activation signal to the autonomous vehicle upon receiving the confirmation.

**8.** At least one non-transitory computer readable medium storing instructions that, when executed by at least one processor, cause the at least one processor to perform actions comprising:

receiving, at a computing device, a request for a mobility service, the request including constraints for usage of an autonomous vehicle during an idle time;

determining, by the computing device, an optimal mobility service strategy for usage of the autonomous vehicle during the idle time based on the constraints;

selecting, by the computing device, the optimal mobility service strategy from a plurality of mobility service strategies; and

transmitting, by the computing device, a notification to a user device, the notification including details of the optimal mobility service strategy.

**9.** The at least one non-transitory computer readable medium of claim 8,

wherein determining the optimal mobility service strategy includes removing service strategies from the plurality of mobility service strategies based on return conditions; and/or

wherein determining the optimal mobility service strategy includes optimizing the plurality of mobility service strategies based on user preferences of an owner of the autonomous vehicle.

**10.** The at least one non-transitory computer readable medium of any one of claims 8 or 9,

the actions further comprising receiving traffic forecast data for use in determining the optimal mobility service strategy; and/or

wherein the constraints include return conditions defining a condition in which the autonomous vehicle is to be returned.

**11.** The at least one non-transitory computer readable medium of any one of claims 8 to 10,
wherein the constraints include preference setting established by an owner of the autonomous vehicle; and/or
the actions further comprising:

receiving confirmation from the user device confirming acceptance of the optimal mobility service strategy; and transmitting an activation signal to the autonomous vehicle upon receiving the confirmation.

**12.** A system for deploying a plurality of autonomous vehicles during idle times, the system comprising:

a processor; and
a memory storing instructions that, when executed by the processor, cause the processor to perform actions comprising:

receiving a plurality of requests for a mobility service during an idle time of a respect one of the plurality of autonomous vehicles, each of the plurality of requests associated with a respective user device;

determining an optimal mobility service strategy for each of the plurality of requests;

pairing the optimal mobility service strategy for each of the plurality of requests with a respective request and one of the plurality of autonomous vehicles; and

transmitting a notification to each of the respective user devices, the notification including the optimal mobility service paired with the respective request.

**13.** The system of claim 12,

wherein determining the optimal mobility service strategy for each of the plurality of requests by the processor includes optimizing the plurality of mobility service strategies based on user preferences of an owner for each of the plurality of autonomous vehicles; and/or

wherein determining the optimal mobility service strategy for each of the plurality of requests by the processor includes removing service strategies from the plurality of mobility service strategies based on return conditions.

**14.** The system of any one of claims 12 or 13,

the instructions executable by the processor to cause the processor to perform additional actions comprising receiving constraints, each of the constraints defining a condition in which a respective one of the plurality of autonomous vehicles is to be returned; and/or

the instructions executable by the processor to cause the processor to perform additional actions comprising receiving traffic forecast data for use in determining the optimal mobility service strategy.

**15.** The system of any one of claims 12 to 14,

the instructions executable by the processor to cause the processor to perform additional actions comprising receiving weather forecast data for use in determining the optimal mobility service strategy.

**FIG. 1**

200 ⟶

202
( START )

↓

204
RECEIVE
OWNER
PREFERENCES

208
RETURN
CONDITIONS

206
PREFERENCES

212
WEATHER &
TRAFFIC

210
RECEIVE
EXTERNAL
DATA

↓

214
RECEIVE
SERVICE
REQUESTS

↓

216
DETERMINE
OPTIMAL
STRATEGIES

MATCH
REQUESTS &
STRATEGIES

↓

218
DETERMINE
TARIFFS
PENALTIES

↓

222
OUTPUT
STRATEGIES

FIG. 2

FIG. 3

Social Responsibility

**FIG. 4A**

Social Responsibility

**FIG. 4B**

Social Responsibility

FIG. 4C

FIG. 5

FIG. 6

Europäisches
Patentamt

European
Patent Office

Office européen
des brevets

# EUROPEAN SEARCH REPORT

Application Number

EP 21 19 8231

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/027354 A1 (GOLDMAN BRENT JUSTIN [US] ET AL) 23 January 2020 (2020-01-23) * paragraphs [0005] – [0041]; figures * ----- | 1-15 | INV. G06Q10/06 |
| X | US 2020/082313 A1 (CRAPIS DAVIDE [US] ET AL) 12 March 2020 (2020-03-12) * paragraphs [0074] – [0076]; figures * ----- | 1-15 | |

TECHNICAL FIELDS
SEARCHED      (IPC)

G06Q

The present search report has been drawn up for all claims

| Place of search | Date of completion of the search | Examiner |
|---|---|---|
| Munich | 11 February 2022 | Aguilar, José María |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 19 8231

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2022

| Patent document cited in search report | | Publication date | Patent family member(s) | | Publication date |
|---|---|---|---|---|---|
| US 2020027354 | A1 | 23-01-2020 | EP<br>US<br>WO | 3827388 A1<br>2020027354 A1<br>2020023490 A1 | 02-06-2021<br>23-01-2020<br>30-01-2020 |
| US 2020082313 | A1 | 12-03-2020 | NONE | | |